# EUROPÄISCHE PATENTANMELDUNG

(11) **EP 3 851 222 A1**
(43) Veröffentlichungstag der Anmeldung: **21.07.2021**
(21) Anmeldenummer: 21150637.3
(22) Anmeldetag: 08.01.2021
(51) Int. Cl.: B21D 22/20, B21D 26/021, B21D 26/14, H01M 50/00

(54) **VERFAHREN ZUR UMFORMUNG VON METALLVERBUNDFOLIEN FÜR BATTERIEZELLEN**

(30) Priorität: 17.01.2020 DE 102020101088
(71) Anmelder: VOLKSWAGEN AG, 38440 Wolfsburg (DE)
(72) Erfinder: Grau, Frederik, 38124 Braunschweig (DE); Jamadar, Kartik, 38442 Wolfsburg (DE); Theuerkauf, Christian, 38114 Braunschweig (DE)
(74) Vertreter: Rössler, Matthias

(57) **Zusammenfassung**

Die vorliegende Erfindung betrifft ein Verfahren zur Umformung einer Metallverbundfolie (4) für Batteriezellen (17), das wenigsten die folgenden Schritte aufweist:
a) Einlegen der Metallverbundfolie (4) in eine Formvorrichtung (1) mit einer Aussparung (5);
b) Fixieren der Metallverbundfolie (4) durch Schließen eines Folienhalters (3);
c) Vorformen der Metallverbundfolie (4) innerhalb der Aussparung (5) in eine erste Richtung; und
d) Endformen der Metallverbundfolie (4) innerhalb der Aussparung (5) in eine zweite Richtung.

## Beschreibung

Die vorliegende Erfindung betrifft ein Verfahren zur Umformung einer Metallverbundfolie für Batteriezellen sowie die nach diesem Verfahren hergestellten Batteriezellen. Insbesondere betrifft die Erfindung das Vor- und Endformen von Aluminium-Verbundfolien für hochkapazitive Batteriezellen durch Druckluft und elektromagnetischen Impuls.

Für die Herstellung von Batteriezellen ist es erforderlich, Metallverbundfolien einer Formgebung zu unterziehen, sodass diese Aufnahmekammern für Batteriezellen mit hoher Leistungsdichte ausbilden können. Hierzu ist es in der Regel erforderlich, die Metallverbundfolien umzuformen. Im Stand der Technik sind hierzu beispielsweise sogenannte Pouchfolien bekannt, die aus einem Verbund aus Aluminium und Kunststoff hergestellt werden. Dabei ist wenigstens eine relativ dünne Aluminiumschicht mit weiteren flexiblen Kunststoffschichten verbunden. Derartige Aluminium-Laminatfolien weisen jedoch eine schlechte Tiefziehfähigkeit auf, sodass es bei der Umformung dieser Folien für Einhausungen bzw. Ummantelungen von Zellstapeln immer wieder zur Bildung von Rissen und Falten kommt. Dies ist kritisch, weil die aus Elektroden und Separatoren gebildeten Batteriezellen sicher ummantelt sein müssen, jedoch in den hoch beanspruchten, d. h. stark verformten Bereichen immer wieder Beschädigungen der ummantelnden Pouchfolien auftreten können.

Zudem erfordern moderne hochkapazitative Batteriezellen, dass eine größtmögliche Anzahl an Elektroden im jeweiligen Zellstapel der Batteriezelle vorzusehen ist, die dann zusammen von der Metallverbundfolie ummantelt werden. Hierzu muss die Metallverbundfolie möglichst tief umgeformt werden. Je tiefer aber diese Umformung der Metallverbundfolie ausfällt, desto größer ist die Materialausdünnung in den kritischen Bereichen, wodurch Schäden entstehen.

Verwendet man zur Umformung der Metallverbundfolie, ein übliches Umformwerkzeug, so treten die Materialausdünnungen insbesondere in den Stempelradien und an Stegen auf, die in dem Werkzeug vorgesehen sind. Derartige kritische Bereiche führen häufig dazu, dass sich in diesen Bereichen der Ummantelung Risse in der Materialverbundfolien ausbilden und dadurch die Betriebssicherheit der Batteriezellen gefährden.

So sind im Stand der Technik unterschiedliche Methoden bekannt, um die Umformung von Metallverbundfolien darzustellen. Eine Methode besteht darin, dass die Folien mittels eines Stempels tiefgezogen werden. Der Stempel verformt dabei die Metallverbundfolie in Richtung einer Matrize, wobei die gewünschte endgültige Form der Metallverbundfolie als Negativform in dieser Matrize ausgebildet ist.

Die bislang bekannten Lösungen haben jedoch unterschiedliche Nachteile. So sieht eine bekannte Lösung vor, dass zur Verbesserung der Umformbarkeit der Aluminiumanteil der Metallverbundfolie erhöht wird, um Schäden zu vermeiden, wodurch jedoch die Materialkosten und das Gewicht der Metallverbundfolie ansteigen. Eine andere Lösungsmöglichkeit besteht darin die Metallverbundfolie bei erhöhten Temperaturen umzuformen. Hierdurch entstehen jedoch höhere Prozess- bzw. Energiekosten.

Schließlich besteht noch eine andere bekannte Lösung darin, dass das verwendete Tiefziehwerkzeug eine zielgerichtete Tuschierung aufweist. Dies ist jedoch sehr zeitaufwendig und erfordert große Erfahrung bei den durchführenden Personen.

Aufgabe der vorliegenden Erfindung ist es daher, die sich aus dem Stand der Technik ergebenden Probleme zumindest teilweise zu lösen. Insbesondere soll ein Verfahren zur Verarbeitung einer Metallverbundfolie angegeben werden, mit der auch große Verformungen der Metallverbundfolie möglich werden, ohne dass es zu Rissbildungen oder sonstigen Beschädigungen der Metallverbundfolie kommt.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Vorliegend wird ein Verfahren zur Herstellung einer Metallverbundfolie für Batteriezellen vorgeschlagen, das wenigsten die folgenden Schritte aufweist:
a) Einlegen der Metallverbundfolie in eine Formvorrichtung mit einer Aussparung ;
b) Fixieren der Metallverbundfolie durch Schließen eines Folienhalters;
c) Vorformen der Metallverbundfolie innerhalb der Aussparung in eine erste Richtung;
d) Endformen der Metallverbundfolie innerhalb der Aussparung in eine zweite Richtung.

Es ist bevorzugt, dass diese Schritte in der hier vorgeschriebenen Reihenfolge a), b) c) und d) durchgeführt werden, wobei nicht erforderlich ist, dass diese unmittelbar aneinander (direkt) anschließen.

Im Schritt a) wird zunächst eine Metallverbundfolie in die Formvorrichtung eingelegt. Die Formvorrichtung weist eine Aussparung auf, durch die hindurch sich die Metallverbundfolie erstreckt. Hierbei ist eine Seite der Aussparung als Matrize ausgebildet und weist genau die Formgebung auf, die die Metallverbundfolie nach dem Tiefziehvorgang aufweisen soll. Hierbei versteht es sich von selbst, dass die Aussparung eine Negativform zu der gewünschten Endform darstellt. Eine Besonderheit in diesem Verfahrensschritt kann darin bestehen, dass die Metallverbundfolie so in der Formvorrichtung angeordnet ist, dass sie zu beiden Seiten der Aussparungen hin verformt werden kann.

Im Schritt b) wird die Metallverbundfolie durch das Schließen eines Folienhalters innerhalb der Formvorrichtung fixiert. Das Schließen führt insbesondere zu einem Klemmen der Metallverbundfolie in bzw. an der Formvorrichtung bzw. in Nachbarschaft der Aussparung. Diese Fixierung ist erforderlich, weil die Metallverbundfolie ansonsten während des Tiefziehvorgangs nicht sicher innerhalb der Formvorrichtung gehalten würde. Der Folienhalter entspricht dabei dem in der Umformtechnik auch mit dem Begriff Blechhalter bezeichneten Abschnitt einer Umformvorichtung.

Der Schritt c) sieht vor, dass die so fixierte Metallverbundfolie innerhalb des Werkzeugs zunächst in eine erste Richtung verformt wird. Diese erste Richtung ist dabei bevorzugt derart gewählt, dass sie von der Seite der Aussparung, die die Endform aufweist, weg gerichtet ist. Mindestens ein Abschnitt der Metallverbundfolie wird zunächst von der Aussparung bzw. Endform-Matrize entfernt hinbewegt. Durch dieses Vorformen werden die Verformungseigenschaften der Metallverbundfolie positiv beeinflusst, was sich im weiteren Prozess des Tiefziehvorgangs als vorteilhaft erweist.

Im Schritt d) wird die Metallverbundfolie dann innerhalb der Aussparung in eine zweite Richtung bewegt und dadurch in die endgültige Form, die sogenannte Endform, gebracht. Die zweite Richtung ist bevorzugt entgegengesetzt zur ersten Richtung orientiert. Idealerweise bildet die Metallverbundfolie in dieser endgültigen Form eine Tasche aus bzw. eine Kammer, in der ausreichend Platz für eine leistungsfähige Batteriezelle vorhanden ist und die verwendete Metallverbundfolie keinerlei Beschädigungen oder Risse aufgrund des Tiefziehprozesses aufweist.

Nach dem so durchgeführten mindestens 2-stufigen, teils entgegengegengesetzten Tiefziehprozess kann die fertige und geformte Metallverbundfolie dann aus der Formvorrichtung entnommen werden.

Die Formvorrichtung ist dazu aus verschiedenen Komponenten zusammengesetzt, die nachfolgend noch eingehender erläutert werden. Die Gestaltung der Formvorrichtung ist dabei abhängig von der für die Vorformung und die Endformung gewählten Methode.

Insbesondere kann vorgesehen werden, dass das Vorformen (insbesondere im Rahmen von Schritt c)) mittels eines atmosphärischen Überdrucks bzw. Unterdrucks, mittels eines konventionellen Vorformstempels oder wenigstens eines elektromagnetischen Impulses [EMP] durchgeführt wird. Hierzu können in der Formvorrichtung Entlüftungskanäle vorgesehen werden, die die Aussparung mit der Umgebung der Formvorrichtung derart verbinden, dass ein Druckausgleich zwischen der Aussparung und der Umgebung stattfinden kann.

Eine erste Variante für die Vorformung besteht beispielsweise darin, die Seite der Aussparung mit der Endform/Matrize mit einem Überdruck zu beaufschlagen, sodass infolge des Überdrucks die Metallverbundfolie aus diesem Bereich heraus bewegt und dabei in die Vorform umgeformt wird.

Zur Nutzung eines Überdrucks kann ggf. auch die gegenüberliegende Seite der Aussparung entsprechend mit einem Unterdruck beaufschlagt werden, wodurch der gleiche Effekt der Umformung in die Vorform erzielt wird.

Die Vorform auch durch einen relativ starken elektromagnetischen Impuls erzielt werden. Hierzu kann auf der Seite der Aussparung, die die Endform aufweist, eine elektrische Spule angeordnet werden, mit der ein elektromagnetischer Impuls erzeugt werden kann. Dazu wird durch einen pulsförmigen Strom ein Magnetfeld in der Spule erzeugt. Dieses Magnetfeld wiederum induziert in der Metallverbundfolie einen Strom. Durch die sich dabei entsprechend der sogenannten Lorentzkraft ergebenden Kräfte, wird die Metallverbundfolie von dieser Spule abgestoßen, sehr schnell wegbewegt und dabei in die Vorform umgeformt.

Die auf diese Weise vorgeformte Metallverbundfolie kann danach mittels einer Verformung in die Endform gebracht werden. Dazu stehen wiederum mehrere technischen Lösungen zur Verfügung. Die Endform kann, wie bereits zuvor auch die Vorform durch Beaufschlagen der entsprechenden Seite der Aussparung mit einem Überdruck bzw. einem Unterdruck erreicht werden. Eine weitere Möglichkeit die Metallverbundfolie nach dem Vorformen in die entgegengesetzte Richtung in die Endform zu bringen besteht darin, einen weiteren entgegengesetzt wirkenden elektromagnetischen Puls zu erzeugen, sodass die durch den elektromagnetischen Impuls auf die Metallverbundfolie ausgeübte Kraft die Metallverbundfolie in Richtung der Seite der Aussparung mit der Endform/Matrize bewegt. Hierzu ist entsprechend an der dazu gegenüberliegenden Seite eine elektrische Spule vorzusehen, die dazu geeignet ist, einen elektromagnetischen Puls mit einer entgegengesetzt wirkenden Lorenzkraft zu erzeugen.

Schließlich kann die Metallverbundfolie mittels eines mechanisch wirkenden Werkzeugs in die Endform umgeformt werden. Hierzu kann beispielsweise ein Stempel die vorgeformte Metallverbundfolie in die als Matrize wirkende Seite der Aussparung hinein umformen und so in die Endform bringen.

Insbesondere kann dabei vorgesehen werden, dass die Metallverbundfolie mittels einer Kraft vorgeformt wird, die in eine erste Richtung wirkt und die Endformung mittels einer dazu genau entgegengesetzten Kraft erfolgt, die in eine zweite bzw. im Wesentlichen entgegengesetzte Richtung wirkt.

Durch die Vorformung der Pouchfolie in die entgegengesetzte Richtung wird mehr Material in die kritische Zone der ausführenden Umformung gebracht. Somit ist die Streckung des Materials in die Richtung der Endform verringert und es kann somit auch tiefer gezogen werden, da mehr Material zur Verfügung steht.

Insbesondere vorteilhaft ist es auch, wenn die Metallverbundfolie so ausgewählt wird, dass die aus einer Aluminium-Verbundfolie besteht. Derartige Aluminium-Verbundfolien sind bereits heute im Markt verfügbar und weisen grundsätzlich gute Eigenschaften hinsichtlich der Dauerfestigkeit und der Aufnahme von Batteriezellen auf. Dies setzt aber voraus, dass während des Tiefziehprozesses Beschädigungen der Verbundfolie vermieden werden, wie dies mittels der vorliegenden Erfindung möglich ist.

Insbesondere können dazu Metallverbundfolie verwendet werden, deren Folienstärke zwischen 120 Mikrometer und 180 Mikrometer beträgt. Derartige Folien weisen die erforderliche Festigkeit auf und sind gleichzeitig noch gut mittels des vorgeschlagenen Tiefziehprozesses umformbar. Diese Erfindung gilt für alle Folienstärken und bringt insbesondere Vorteile für dünne Aluminiumschichten (ca. 40 µm) mit sich, da das Aluminium während der Umformung das Material aus der Schichtdicke nimmt. Der Wert der Anisotropie bei Aluminium ist kleiner als 1.

Ganz besonders vorteilhaft können folglich Batteriezellen mit einer Metallverbundfolie hergestellt werden, die nach dem zuvor beschriebenen Verfahren formgebend bearbeitet worden sind. Der Vorteil der vorliegenden Erfindung besteht darin, dass die so verarbeiteten Metallverbundfolie frei von Beschädigungen, wie beispielsweise Materialausdünnungen oder Rissen sind und somit mittels der Metallverbundfolie eine sichere und dauerhafte Ummantelung der Batteriezellen gewährleistet ist.

Ein andere besonders bevorzugte Ausführungsform der vorliegenden Erfindung zur Lösung der Aufgabenstellung sieht eine Formvorrichtung zur Umformung einer Metallverbundfolie für Batteriezellen vor. Die so gestaltete Formvorrichtung weist einen ersten Abschnitt und einen zweiten Abschnitt sowie einen Folienhalter für die Metallverbundfolie auf. Dabei sind der erste Abschnitt und der zweite Abschnitt so ausgebildet, dass sie im aneinander anliegenden Zustand eine Aussparung umschließen. Weiterhin umfasst die Formvorrichtung ein erstes Umformmittel zum Umformen der Metallverbundfolie in eine erste Richtung und ein zweites Umformmittel zum Umformen der Metallverbundfolie in eine dazu vorzugsweise entgegengesetzte zweite Richtung. Als erstes oder zweites Umformmittel können beispielsweise die zuvor beschriebenen Spulen, Luftkanäle zum Einleiten oder Abführen von Luft oder mechanischen Stempel mit ihren jeweiligen Wirkrichtungen verwendet werden. Mit der so gestalteten Formvorrichtung kann die Metallverbundfolie zunächst in die erste Richtung vorgeformt und anschließend in die zweite Richtung endgeformt werden. Hierbei wird vorzugsweise der Bereiche der Aussparung, in welche die Metallverbundfolie während der jeweiligen Verformung hineinbewegt wird, mittels wenigstens eines Luftkanals entlüftet, um eine ungehinderte Verformung ohne Luftstauungen zu erreichen.

Insbesondere profitiert im Weiteren ein Kraftfahrzeug von der vorliegenden Erfindung, wenn dieses mit wenigstens einer Batteriezelle ausgestattet ist, die von einer Metallverbundfolie umschlossen ist, welche zuvor gemäß dem vorgeschlagenen Verfahren formgebend bearbeitet worden ist.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
Fig.1: eine seitliche Schnittansicht einer ersten Ausführungsvariante einer Formvorrichtung;
Fig. 2: eine seitliche Schnittansicht einer zweiten Ausführungsvariante einer Formvorrichtung;
Fig. 3: eine seitliche Schnittansicht einer dritten Ausführungsvariante einer Formvorrichtung;
Fig. 4: eine seitliche Schnittansicht einer vierten Ausführungsvariante einer Formvorrichtung; und
Fig. 5: ein Kraftfahrzeug mit Batteriezellen.

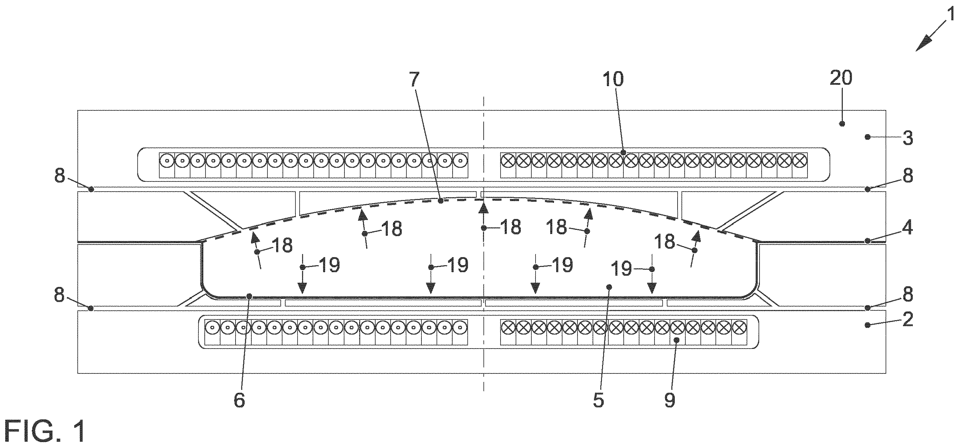

In Figur 1 ist eine Formvorrichtung 1 in einer seitlichen Schnittansicht dargestellt. Die Formvorrichtung 1 besteht aus einem ersten Abschnitt 2, der als Matrize ausgebildet ist und das Unterteil bildet, sowie einem zweiten Abschnitt 3, der als Folienhalter 20 wirkt und ein Oberteil der Formvorrichtung 1 bildet. Zwischen dem ersten Abschnitt 2 und dem zweiten Abschnitt 3 ist eine Metallverbundfolie 4 am äußeren Rand der Formvorrichtung 1 fest eingespannt. Dazu werden der erste Abschnitt 2 und der zweite Abschnitt 3 fest gegeneinandergepresst. Die Metallverbundfolie 4 ist beispielsweise eine Aluminium-Verbundfolie, die auch bekannt als Pouchfolie bezeichnet wird. Die beiden Abschnitte 2, 3, umschließen gemeinsam eine Aussparung 5 in der die Pouchfolie zu einer fertigen Folientasche, einer sogenannten Pouch, geformt wird. Der erste Abschnitt 2 bildet den Teil der Aussparung 5, der eine Endform 6 ausbildet. D. h. der erste Abschnitt 2 ist als exakte Negativform für den Endzustand der fertig umgeformten Metallverbundfolie 4 ausgebildet. In der Figur 1 geben in der Aussparung 5 die nach oben gerichteten Pfeile eine erste Richtung 18 und die nach unten gerichteten Pfeile eine zweite Richtung 19 an.

Durch eine Verformung in die erste Richtung 18 wird die Metallverbundfolie zunächst in eine Vorform 7 verformt und danach durch eine Verformung in die (entgegengesetzte) zweite Richtung 19 in eine Endform 6 gebracht.

Die innerhalb der Aussparung 5 dargestellte gestrichelte Linie zeigt den Konturverlauf der Metallverbundfolie 4 mit der Vorform 7. D. h. die gestrichelte Linie gibt den Konturverlauf an, den die Metallverbundfolie 4 nach der erfolgten Vorformung aufweist. Sowohl der erste Abschnitt 2 als auch der zweite Abschnitt 3 sind jeweils mit Luftkanälen 8 ausgestattet, die sowohl während des Vorformens als auch während des Endformens eine Entlüftung der Aussparung 5 gewährleisten. Der erste Abschnitt 2 weist ferner eine erste Spule 9 auf, die dazu ausgelegt ist einen elektromagnetischen Impuls auszusenden, sobald die dargestellten Leiter der ersten Spule 9 von einem Strom durchflossen werden. Mittels der ersten Spule 9 kann ein elektromagnetischer Impuls erzeugt werden, der die Metallverbundfolie 4 durch die dabei erzeugte und auf die Metallverbundfolie 4 einwirkende Lorenzkraft nach oben in die erste Richtung 18 umformt. Dort gelangt die Metallverbundfolie 4 dann in Anlage zu demjenigen Abschnitt der Aussparung 5, der zum zweiten Abschnitt 3 der Formvorrichtung 1 gehört. Um die Endform 6 der Metallverbundfolie 4 zu erreichen, weist der zweite Abschnitt 3 eine zweite Spule 10 auf, die ebenfalls dazu ausgelegt ist einen elektromagnetischen Impuls allerdings in entgegengesetzter Richtung auszusenden. Das heißt die von der Spule 10 erzeugte Lorenzkraft wird nun in die zweite Richtung 19. Nach der durchgeführten Vorformung kann mittels der nun oberhalb angeordneten zweiten Spule 10 ein weiterer elektromagnetischer Impuls ausgesendet werden, der seinerseits die Umformung in die Endform 6 bewirkt. Bei dem Vorgang der Umformung in die Endform 6 wird die Metallverbundfolie 4 nach unten in die als Matrize ausgebildete Aussparung 5 des ersten Abschnitts 2 gedrückt. Durch Umpolung des Stromflusses ist es ebenfalls möglich nur eine Spule zu verwenden. So ist die Richtung der Lorenzkraft steuerbar.

Die Umformung mittels eines elektromagnetischen Impulses hat in vielfacher Hinsicht Vorteile. So kann auf diese Weise eine sehr hohe Prozessgeschwindigkeit von beispielsweise mehr als 100 m/s erreicht werden. Hierdurch verbessert sich die Umformbarkeit des verwendeten Materials erheblich, da dieses für die Umformung in einen viskoplastischen Zustand gebracht werden kann. Weiterhin wird die ansonsten üblicherweise auftretende Reibung zwischen dem Stempel und der Matrize eines Umformwerkzeugs und dem Werkstück vermieden, indem die vorliegende umzuformende Metallverbundfolie 7 berührungslos umgeformt wird. Hierdurch kann auch der Energieverbrauch erheblich gesenkt werden, da keine mechanischen Antriebe oder die energieaufwändige Erzeugung von Druckluft für einen druckbetriebenen Umformprozess erforderlich sind. So erfordert die Umformung mittels Druckluft insbesondere bei größeren Formaten eine relativ kostenintensive Erzeugung von Druckluft, was sich in höheren Prozesskosten niederschlägt. Zudem werden auch die Prozesszeiten beispielsweise durch die Verwendung regelbare Ventile negativ beeinflusst, da diese relativ langsam arbeiten. Ein weiterer Vorteil der elektromagnetischen Umformung ist die Ausformung scharfer Konturen. So ist es nicht nur möglich senkrechte Kanten zu erzeugen, sondern auch Hinterschnitte zu formen.

Mittels der vorliegenden Erfindung kann weiterhin der Verschleiß der Formvorrichtung 1 erheblich verringert werden und es sind größere Ziehtiefe möglich, als dies bislang im Stand der Technik der Fall war. Außerdem können mittels der vorliegenden Erfindung und hierbei insbesondere mittels der Umformung durch elektromagnetische Impulse besonders gleichmäßige Materialverteilungen an der umgeformten Metallverbundfolie 4 erreicht werden. Weitere positive Nebeneffekte der vorliegenden Erfindung bestehen darin, dass die für die Fertigung erforderlichen Taktzeiten deutlich verkürzt werden können und die bei einem Umformvorgang regelmäßig auftretende Rückfederung des umzuformenden Bauteils erheblich reduziert werden kann.

Nach diesem Schritt ist der formgebende Teil des Herstellungsprozesses abgeschlossen und die fertiggeformte Metallverbundfolie 4 kann entnommen werden. Ein Trennen der Metallverbundfolie bzw. der Pouchfolie erfolgt dabei während des Herstellungsprozesses oder auch nachfolgend, so dass das gewünschte Endmaß eingestellt werden kann.

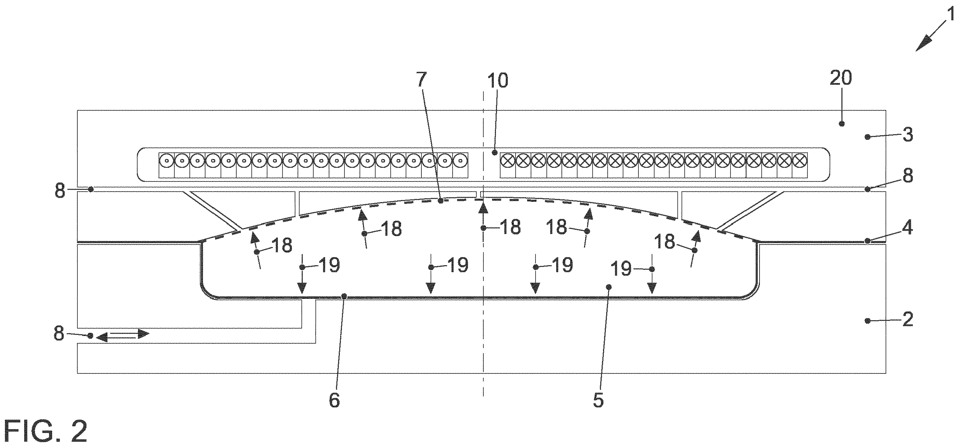

Die Figur 2 zeigt eine andere mögliche Ausführungsform der vorliegenden Erfindung. Diese Formvorrichtung 1 weist nur in dem das Oberteil bildenden zweiten Abschnitt 3 die Spule 10 auf. Bei dieser Ausführungsform wirkt der zweite Abschnitt 3 als Folienhalter 20, indem er fest gegen den darunterliegenden ersten Abschnitt 2 gepresst wird und dabei die Metallverbundfolie 3 sicher in der Formvorrichtung 1 einspannt. Um die Metallverbundfolie 4 nach dem Einspannen in die Vorform 7 zu umzuformen, wird durch den links unten angeordneten Luftkanal 8 Druckluft in die Aussparung 5 gefördert, sodass die Metallverbundfolie 4 innerhalb der Aussparung 5 zunächst nach oben in die erste Richtung 18 vorgeformt wird. Im darauffolgenden Verfahrensschritt wird die sich in der Vorform 7 befindliche Metallverbundfolie 4 mittels eines von der Spule 10 erzeugten elektromagnetischen Impulses aufgrund der dabei erzeugten Lorentzkraft mit besonders großer Geschwindigkeit in die zweite Richtung 19 nach unten in die Endform 7 umgeformt. Bei dieser Ausführungsform wird der Vorgang des Vorformens mittels Druckluft ausgeführt und der Vorgang des Endformens mittels eines elektromagnetischen Impulses.

Bei den in den Figuren 1 und 2 gezeigten Ausführungsformen kann die Vorform 7, also die Geometrie der vorgeformte Metallverbundfolie 4, durch die Innenkontur des zweiten Abschnitts 3 im Bereich der Aussparung 5 genau definiert werden.

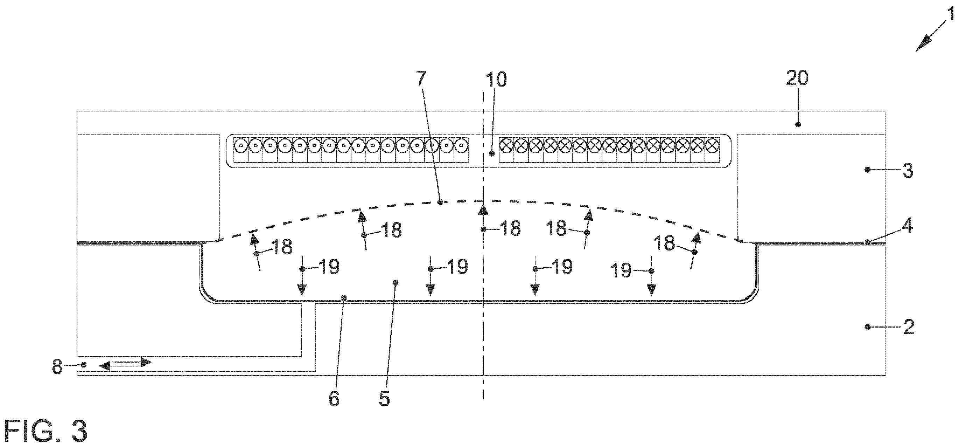

In Figur 3 ist eine weitere mögliche Ausführungsform der vorliegenden Erfindung dargestellt, bei der der erste Abschnitt 2 wiederum als Matrize ausgebildet ist und Teil der Aussparung 5 ist. Die Aussparung 5 wird durch den Lüftungskanal 8 be- und entlüftet. Die Metallverbundfolie 4 wird auch bei dieser Ausführungsform innerhalb der Formvorrichtung 1 zunächst durch den als Folienhalter 20 wirkenden zweiten Abschnitt 3 fest eingespannt. Die Besonderheit dieser Ausführungsform besteht darin, dass die Aussparung 5 an der Oberseite keinen formgebenden Bereich mehr aufweist, sondern lediglich von der Spule 10 überdeckt ist. Um die Metallverbundfolie 4 nun in die Vorform 7 zu bringen, wird Druckluft über den links unten angeordneten Luftkanal 8 in die Aussparung 5 geleitet, wodurch die Metallverbundfolie 4 in die gestrichelt dargestellte Vorform 7 vorgeformt wird. Dabei gelangt die Metallverbundfolie 4 bei dieser Ausführungsform nicht in Anlage zu einem formgebenden Bereich des zweiten Abschnitts 3. Um die so in der ersten Richtung 18 vorgeformte Metallverbundfolie 4 abschließend in die Endform 6 zu bringen, wird wiederum mittels der Spule 10 ein elektromagnetischer Impuls erzeugt. Durch diesen elektromagnetischen Impuls wirkt eine in die zweite Richtung 19 nach unten wirkende Lorentzkraft auf die Metallverbundfolie 4 ein. Hierdurch wird die Metallverbundfolie 4 mit hoher Geschwindigkeit in Richtung der Matrize des ersten Abschnitts 2 umgeformt, wobei die Metallverbundfolie 4 die Kontur der Endform 6 annimmt. Durch die Kombination aus Vorformen und Endformen mit hoher Geschwindigkeit ist es möglich die Metallverbundfolie 4 in einem deutlich größeren Maß umzuformen als dies bislang der Fall war, ohne dabei Beschädigungen, wie beispielsweise Risse, an der Metallverbundfolie 4 zu erzeugen.

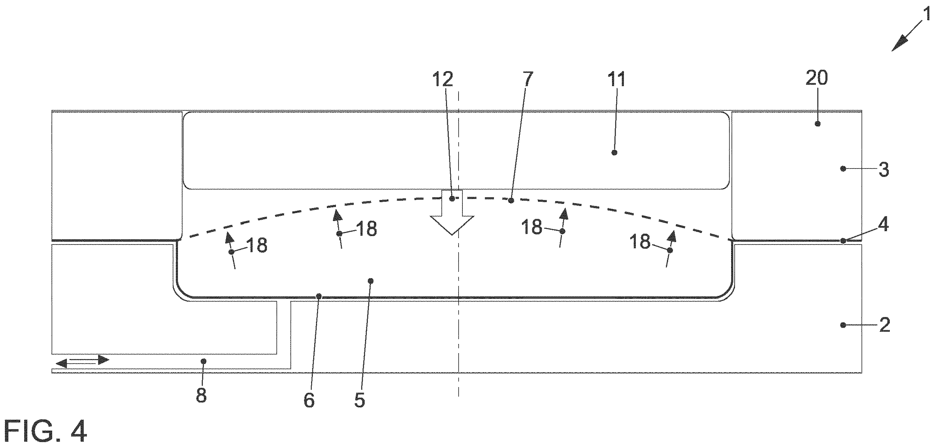

Die Figur 4 zeigt eine weitere mögliche Ausführungsform einer Formvorrichtung 1, die weitgehend so aufgebaut ist, wie Formvorrichtung 1 gemäß Figur 3. Bei dieser Ausführungsform ist jedoch im zweiten Abschnitt 3 anstelle der zuvor verwendeten Spule 10 abweichend ein mechanisch wirkender Stempel 11 vorgesehen, der in Richtung des Pfeils 12 nach unten verfahren werden kann. Dieser Stempel 11 dient dazu die Metallverbundfolie 4, nachdem diese mittels über den Luftkanal 8 zugeführte Druckluft in der ersten Richtung 18 in die Vorform 7 gebracht worden ist, durch mechanische Umformung in die Endform 6 umzuformen. Dazu wird der Stempel 11 mittels einer nicht dargestellten Antriebsvorrichtung in Richtung des Pfeils 12 nach unten in die Matrize des ersten Abschnitts 2 verfahren. Die Richtung des Pfeils 12 entspricht dabei der zweiten Richtung 19. Auch bei dieser Ausführungsform kann durch die Kombination von Vorformen und Endformen eine besonders gute Tiefziehfähigkeit ohne Beschädigungen der Metallverbundfolie 4 erreicht werden.

Bei den Ausführungsformen gemäß den Figuren 3 und 4 ist die Vorform 7 nicht durch den zweiten Abschnitt 3 definiert. Vielmehr kann die Metallverbundfolie 4 bei diesen Ausführungsformen während des Vorgangs des Vorformens eine freie Kontur annehmen.

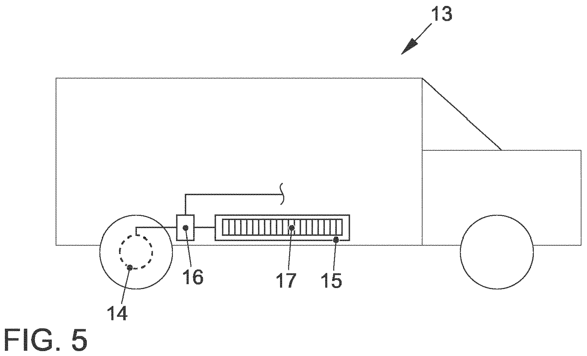

Schließlich ist in Figur 5 noch eine Ausführungsform dargestellt, bei der ein Kraftfahrzeug 13 mit einem Elektroantrieb betrieben wird. Ein schematisch dargestellter Elektromotor 14 wird dazu von einer Batterie 15 mit Energie versorgt. Kontrolliert wird die Energieversorgung mittels einer Steuerung 16. Innerhalb der Batterie 15 sind eine Vielzahl von Batteriezellen 17 angeordnet, die gemäß der vorliegenden Erfindung hergestellt werden können. Ein so gestaltetes Kraftfahrzeug 13 hat den Vorteil, dass die darin angeordneten Batteriezellen 17 besonders zuverlässig sind, da deren Ummantelung mit Metallverbundfolien 4 ohne Beschädigungen und damit äußerst zuverlässig ausgeführt sind und gleichzeitig sehr leistungsfähige und zuverlässig ummantelte Batteriezellen verwendet werden können.

### Bezugszeichenliste

- 1: Formvorrichtung
- 2: Erster Abschnitt
- 3: Zweiter Abschnitt
- 4: Metallverbundfolie
- 5: Aussparung
- 6: Endform
- 7: Vorform
- 8: Luftkanal
- 9: Erste Spule
- 10: Zweite Spule
- 11: Stempel
- 12: Pfeil
- 13: Kraftfahrzeug
- 14: Elektromotor
- 15: Batterie
- 16: Steuerung
- 17: Batteriezelle
- 18: Erste Richtung
- 19: Zweite Richtung
- 20: Folienhalter

## Patentansprüche

1. Verfahren zur Umformung einer Metallverbundfolie (4) für Batteriezellen (17), das wenigsten die folgenden Schritte aufweist:
a) Einlegen der Metallverbundfolie (4) in eine Formvorrichtung (1) mit einer Aussparung (5);
b) Fixieren der Metallverbundfolie (4) durch Schließen eines Folienhalters (20)
c) Vorformen der Metallverbundfolie (4) innerhalb der Aussparung (5) in eine erste Richtung
d) Endformen der Metallverbundfolie (4) innerhalb der Aussparung (5) in eine zweite Richtung.

2. Verfahren nach dem vorhergehenden Anspruch, wobei das Vorformen mittels eines atmosphärischen Überdrucks bzw. Unterdrucks oder wenigstens eines elektromagnetischen Impulses durchgeführt wird.

3. Verfahren nach einem der vorhergehenden Ansprüche, wobei das Endformen mittels eines atmosphärischen Überdrucks, wenigstens eines elektromagnetischen Impulses oder eines Stempels (11) durchgeführt wird.

4. Verfahren nach einem der vorhergehenden Ansprüche, wobei die erste Richtung entgegengesetzt zur zweiten Richtung gewählt wird.

5. Verfahren nach einem der vorhergehenden Ansprüche, wobei die Formvorrichtung (1) zumindest während des Vorformens oder des Endformens wenigstens der in Verformungsrichtung jeweils hinter der Metallverbundfolie (4) liegenden Bereich der Aussparung (5) entlüftet wird.

6. Verfahren nach einem der vorhergehenden Ansprüche, wobei als Metallverbundfolie (4) eine Aluminium-Verbundfolie verwendet wird.

7. Verfahren nach einem der vorhergehenden Ansprüche, wobei eine Wandstärke der Metallverbundfolie zwischen 120 µm und 180 µm gewählt wird.

8. Batteriezelle (17) mit einer Metallverbundfolie (4) hergestellt nach einem der vorhergehenden Patentansprüche.

9. Formvorrichtung (1) zur Umformung einer Metallverbundfolie (4) für Batteriezellen (17) mit einem ersten Abschnitt (2) und einem zweiten Abschnitt (3) und einem Folienhalter (20) für die Metallverbundfolie (4), wobei der erste Abschnitt (2) und der zweite Abschnitt (3) eine Aussparung (5) umschließen, **dadurch gekennzeichnet, dass** ein erstes Umformmittel (8, 10) zum Umformen der Metallverbundfolie (4) in einer erste Richtung (18) und ein zweites Umformmittel (10, 11) zum Umformen der Metallverbundfolie (4) in eine zweite Richtung (12,19) vorgesehen ist.

10. Kraftfahrzeug (13) mit wenigstens einer Batteriezelle (17) nach dem vorhergehenden Patentanspruch 8.
